# EUROPÄISCHE PATENTSCHRIFT

(11) **EP 2 568 557 B1**
(45) Veröffentlichungstag und Bekanntmachung des Hinweises auf die Patenterteilung: **26.02.2014**
(21) Anmeldenummer: 11180311.0
(22) Anmeldetag: 07.09.2011
(51) Int. Cl.: H02H 3/16, H02H 3/32, H02H 3/33, H02H 3/347, H02H 7/10, H01H 83/02

(54) **Verfahren zum Betreiben eines Fehlerstromschutzschalters sowie Fehlerstromschutzschalter für einen Frequenzumrichter**
Method of operating a residual current circuit breaker and residual current circuit breaker for a frequency converter
Procédé de fonctionnement d'un disjoncteur à courant de fuite et disjoncteur à courant de fuite pour un convertisseur de courant

(43) Veröffentlichungstag der Anmeldung: 13.03.2013
(73) Patentinhaber: Siemens Aktiengesellschaft, 80333 München (DE)
(72) Erfinder: Dillig, Reinhold, 96117 Memmelsdorf (DE); Herrmann, Bernd, 91074 Herzogenaurach (DE); Schierling, Hubert, 91052 Erlangen (DE); Weis, Benno, 91334 Hemhofen (DE)

(56) Entgegenhaltungen:
- EP-A2- 1 939 997
- WO-A1-2004/017483

## Beschreibung

Die Erfindung betrifft einen Fehlerstromschutzschalter für einen Frequenzumrichter. Der Fehlerstromschutzschalter umfasst Netzleitungen, um dem Frequenzumrichter einen Netzstrom aus einem elektrischen Versorgungsnetz zuzuführen, eine Schalteinrichtung, um den Netzstrom in der Netzleitungen auf ein Auslösesignal hin zu unterbrechen, eine Messeinrichtung, um in den Netzleitungen ein Messsignal zu einem Gleichtaktstrom zu erfassen, und eine Auswerteeinheit, über welche die Messeinrichtung mit der Schalteinrichtung gekoppelt ist und welche anhand des Messsignals einen Fehlerstrom erkennt und gegebenenfalls das Auslösesignal erzeugt. Zu der Erfindung gehört auch ein Verfahren zum Betreiben eines Fehlerstromschutzschalters für einen Frequenzumrichter.

Mittels eines Frequenzumrichters kann beispielsweise eine elektrische Maschine an einem elektrischen Versorgungsnetz betrieben werden. Durch den Frequenzumrichter werden dazu in Wicklungen der Maschine Wechselspannungen erzeugt, deren Frequenz und Effektivwert durch den Frequenzumrichter vorgegeben werden. Der Frequenzumrichter lädt dabei zunächst mittels eines Gleichrichters einen Glättungskondensator in einem Zwischenkreis mit dem Netzstrom auf, den er über die Netzleitungen des Fehlerstromschutzschalters empfängt. In dem Zwischenkreis steht so eine Gleichspannung zur Verfügung. Ein Wechselrichter des Frequenzumrichters erzeugt dann aus der Gleichspannung die einzelnen Wechselspannungen in den Wicklungen der elektrischen Maschine. Die Frequenz und die mittlere Amplitude der Wechselspannungen können hierbei beispielsweise auf der Grundlage einer Pulsweitenmodulation von Schaltsignalen für Halbleiter-Leistungsschalter eingestellt werden, mit deren Hilfe in dem Wechselrichter die Wechselspannungen erzeugt werden.

Aufgrund einer Pulsweitenmodulation kann es aber zu betriebsmäßigen Ableitströmen kommen, d.h. zu Strömen, die nicht ausschließlich über die Netzleitungen des Fehlerstromschutzschalters zu- und abfließen. Stattdessen wird der Stromkreis über ein Erd- oder Massepotential geschlossen. Die Ableitströme werden hierbei durch eine kapazitive Kopplung zwischen dem Frequenzumrichter oder der elektrischen Maschine einerseits und Gegenständen in deren Umgebung andererseits ermöglicht.

Ein Ableitstrom stellt in den Netzleitungen einen Gleichtaktstrom (Englisch: Common mode current) dar. Er entspricht damit in Bezug auf die Flussrichtung des Stromes einem Fehlerstrom, der ebenfalls als Gleichtaktstrom über eine Erd- oder Massepotential abfließt, wenn beispielsweise eine Isolierung der Wicklungen im Motor beschädigt ist und deshalb ein Strom aus dem Frequenzumrichter über ein Gehäuse des Motors abfließt.

Wird also eine Anordnung aus Frequenzumrichter und elektrischer Maschine für einen Personen- und/oder Brandschutz über einen herkömmlichen Fehlerstromschutzschalter betrieben, kann sich das Problem ergeben, dass ein solcher Schutzschalter nicht zwischen einem wirklichen (beispielsweise durch ein beschädigtes Kabel verursachten) Fehlerstrom und einem betriebsmäßig erzeugten Ableitstrom unterscheiden kann. Es kommt daher zu unerwünschten Fehlauslösungen des Fehlerstromschutzschalters.

In dem Dokument WO 2004/017483 A1 ist ein Schutzschalter beschrieben, welcher einem Drehstromantrieb mit Pulsweitenmodulation vorgeschaltet werden kann. Ein Fehlerstrom wird im Frequenzbereich analysiert und dabei die durch den Drehstromantrieb erzeugten Frequenzen ausgeblendet.

Aus dem Dokument EP 1 939 997 A2 ist ein ableitstromfester Fehlerstromschutzschalter beschrieben, bei welchem neben mindestens einem Phasenleiter und einem Nulleiter zusätzlich ein Funktionsableiter zum Ableiten eines Funktionsableitstroms durch einen Summenstromwandler geführt ist. Dadurch löst der Fehlerstromschutzschalter nicht aus, wenn Funktionsableitströme auftreten.

Es ist Aufgabe der vorliegenden Erfindung, den Einsatz eines Fehlerstromschutzschalters für einen Frequenzumrichter zu ermöglichen.

Die Aufgabe wird durch das Verfahren gemäß Anspruch 1 sowie durch den Fehlerstromschutzschalter gemäß Anspruch 13 gelöst. Vorteilhafte Weiterbildungen der Erfindung sind durch die Unteransprüche gegeben.

Bei dem erfindungsgemäßen Verfahren zum Betreiben eines Fehlerstromschutzschalters wird berücksichtigt, wann genau die Leistungsschalter in dem Frequenzumrichter geschaltet werden. Dahinter steht die Erkenntnis, dass eine Stromstärke des Ableitstroms während solcher Schaltvorgänge besonders groß wird. Grund dafür ist, dass die mit dem Schalten der Leistungsschalter einhergehenden transienten Spannungsverläufe einen derart hochfrequenten Signalanteil aufweisen, dass sich entsprechend geringe Impedanzen der Koppelkapazitäten ergeben.

Gemäß dem Verfahren wird daher eine Schaltinformation über Schaltvorgänge in dem Frequenzumrichter durch den Fehlerstromschutzschalter empfangen. Zusätzlich wird ein Signal zu einem Gleichtaktstrom in einer Netzleitungseinrichtung erfasst, über welche der Frequenzumrichter den Netzstrom empfängt. Anhand der Schaltinformation wird ermittelt, welches Signal zu dem Gleichtaktstrom zu erwarten wäre, wenn es sich aufgrund der Schaltvorgänge (nicht etwa durch einen zusätzlichen Fehlerstrom) ergeben würde. Anhand des erfassten (tatsächlichen) Signals zu dem Gleichtaktstrom und des zu erwartenden Signals kann dann ein Fehlerstrom erkannt werden und gegebenenfalls der Netzstrom unterbrochen werden.

Das erfindungsgemäße Verfahren weist den Vorteil auf, dass anhand der Schaltinformation zuverlässig zwischen einem betriebsmäßigen Ableitstrom und einem unerwünschten Fehlerstrom unterschieden werden kann. Es kommt daher seltener zu einer Fehlauslösung des Fehlerstromschutzschalters. Als weiterer Vorteil ergibt sich, dass nur an einer Stelle der Anordnung aus Fehlerstromschutzschalter und Frequenzumrichter ein Signal zu dem Gleichtaktstrom erfasst werden muss, nämlich in der netzseitigen Netzleitungseinrichtung. Dies verringert in vorteilhafter Weise den Schaltungsaufwand zum Bereitstellen eines Fehlerstromschutzschalters, der sich gemäß dem erfindungsgemäßen Verfahren betreiben lässt.

Bei dem Signal, das zu den Gleichtaktstrom erfasst wird, und entsprechend auch bei dem Signal, welches als zu erwartendes Signal ermittelt wird, handelt es sich bei einer Ausführungsform des Verfahrens jeweils um einen zeitlichen Verlauf einer Stromstärke des Gleichtaktstroms. Hierbei ergibt sich der Vorteil, dass unmittelbar ein Zeitsignal verarbeitet werden kann, wie es beispielsweise von einem Summenstromwandler erzeugt wird. Es sind keine zusätzlichen Rechenschritte nötig, wie etwa eine Frequenztransformation. Eine andere Ausführungsform des Verfahrens sieht vor, als Signal ein Betragsspektrum eines solchen Zeitsignals zu ermitteln. Dies hat den Vorteil, dass sich die Schaltinformation besonders kompakt von der Quelle der Schaltinformation zu dem Fehlerstromschutzschalter hin übertragen lässt. Eine dritte Ausführungsform sieht eine Kombination aus einem zeitlichen Verlauf und einem Betragsspektrum vor.

Um anhand des erfassten Signals und des zu erwartenden Signals einen Fehlerstrom zu erkennen, ist in einer Ausführungsform vorgesehen, das erfasste Signal anhand eines Kriteriums zu überprüfen, dass auf der Grundlage des zu erwartenden Signals gebildet ist. So kann beispielsweise vorgesehen sein, dass auf Grundlage des zu erwartenden Signals Zeitabschnitte ermittelt werden, während welcher die Erkennung eines Fehlerstroms durchgeführt wird, sowie solche Zeitabschnitte, während welcher die Erkennung unterbrochen wird, weil beispielsweise gerade ein Schaltvorgang in dem Frequenzumrichter einen Ableitstrom mit einer kritischen Stromstärke erzeugt. Eine hieran anknüpfende Ausführungsform des erfindungsgemäßen Verfahrens sieht entsprechend vor, dass als Schaltinformation zumindest eine Information zu einem Schaltzeitpunkt empfangen wird, in welchem ein Leistungsschalter des Frequenzumrichters geschaltet wird. Zu diesem Zeitpunkt kann dann die Erkennung eines Fehlerstroms unterbrochen und so eine Fehlauslösung vermieden werden. Mit anderen Worten können Schaltflanken ausgeblendet werden, die sich in dem Signal zu dem Gleichtaktstrom aufgrund der Schaltvorgänge ergeben.

Eine andere Ausführungsform sieht vor, dass als Schaltinformation zumindest eine Information zu einer Flankensteilheit und/oder einer Erdkapazität empfangen wird. Bei dieser Ausführungsform ergibt sich der Vorteil, dass sich eine Stromstärke eines durch einen Schaltvorgang verursachten zu erwartenden Ableitstrompeaks (Ableitstromspitze) ermitteln lässt und daher auch während des Schaltvorgangs eine Unterscheidung zwischen einem Ableitstrom und einem Fehlerstrom möglich ist. Durch die Information über die Flankensteilheit ist hierbei festgelegt, innerhalb welchen Zeitraums ein bestimmter Leistungsschalter des Frequenzumrichters zwischen einem vollständig sperrenden Zustand und einem solchen Zustand erreicht wird, in dem ein Strom mit einer vorgegebenen effektiven Soll-Stromstärke über den Leistungsschalter ließ. Die Erdkapazität gibt eine Koppelkapazität zwischen einer Komponente des Frequenzumrichters oder einer an diesem angeschlossenen elektrischen Maschine einerseits und einem Erdpotenzial in der Umgebung der Komponente an.

Eine weitere Ausführungsform des erfindungsgemäßen Verfahrens sieht vor, dass als Schaltinformation zumindest eine Information darüber empfangen wird, ob durch einen Schaltvorgang eine Wechselspannungs-Leitung eines Wechselrichters des Frequenzumrichters mit einem Pluspotential oder einem Minuspotential eines Zwischenkreises des Frequenzumrichters elektrisch verbunden wird. Hier ergibt sich der Vorteil, dass auf die Flussrichtung des zu erwartenden Ableitstroms rückgeschlossen werden kann und somit ein Vorzeichen von entsprechenden Werten des zu erwartenden Signals vorhersagbar ist.

Die Menge der als Schaltinformation empfangenen Daten lässt sich in vorteilhafter Weise verringern, wenn als Schaltinformation zumindest eine Information über eine Sollspannung und eine Pulsfrequenz empfangen werden, die durch einen Wechselrichter des Frequenzumrichters erzeugt werden. Mit anderen Worten wird bei dieser Ausführungsform nicht zu jedem einzelnen Schaltvorgang eines Leistungsschalters des Frequenzumrichters ein Signal an den Fehlerstromschutzschalter übertragen. Aus der Schaltspannung und der Pulsfrequenz lassen sich in einfacher Weise das in dem ermittelten Signal zu erwartende Pulsmuster der Schaltvorgänge vorhersagen, indem aus der empfangenen Schaltinformation auf der Grundlage des Schaltalgorithmus, gemäß welchem die Wechselrichter betrieben werden, die einzelnen Schaltzeitpunkte berechnet werden. Es kann ausreichend sein, nur eine der beiden Betriebsgrößen an den Fehlerstromschutzschalter zu übertragen, wenn dies zur Berechnung des Pulsmusters ausreicht.

Bei einer anderen Ausführungsform des erfindungsgemäßen Verfahrens ist der Datentransfer zum Schutzschalter hin noch weiter reduziert, indem als Schaltinformation ein Frequenzspektrum des zu erwartenden Signals für den Gleichtaktstrom empfangen wird. Hierbei wird ausgenutzt, dass durch die Schaltvorgänge insgesamt ein Linienspektrum entsteht. Zu dessen Übertragung ist es ausreichend, nur bestimmte Stützstellen (wie die Amplituden bei der Pulsfrequenz und ihren ganzzahligen vielfachen sowie zugehörige Seitenbänder zu diesen Frequenzstellen) zu übertragen.

Eine zum Durchführen des erfindungsgemäßen Verfahrens benötigte Rechenleistung ist bei einer Ausführungsform des Verfahrens dadurch in vorteilhafter Weise verringert, dass als Schaltinformation zumindest eine Information über wenigstens eine der folgenden Betriebsgrößen eines Wechselrichters des Frequenzumrichters empfangen wird: eine Motorfrequenz, ein Ansteuergrad, eine Pulsfrequenz. Aus diesen Größen (oder gegebenenfalls bereits aus einer Teilmenge davon, wenn beispielsweise die übrigen Größen konstant sind und deshalb im Voraus bekannt sind) kann mit geringem Aufwand ein Betragsspektrum berechnet werden, wie es als Gleichtaktstromsignal zu erwarten ist, wenn kein zusätzlicher Fehlerstrom fließt. Dieses zu erwartende Betragsspektrum kann dann zum Erkennen eines Fehlerstroms mit einem gemessenen Betragsspektrum des Gleichtaktstroms verglichen werden.

Im Zusammenhang mit einer Erkennung des Fehlerstroms wird gemäß einer anderen vorteilhaften Ausführungsform des erfindungsgemäßen Verfahrens jeweils eine spektrale Einhüllende zu einem erfassten Frequenzspektrum einerseits und zu einem zu erwartenden Frequenzspektrum andererseits gebildet. Anhand dieser spektralen Einhüllenden lässt sich ein betriebsbedingter Ableitstrom besonders deutlich von einem unerwünschten Fehlerstrom unterscheiden. Die Ausführungsform beruht auf der Erkenntnis, dass bei einem betriebsbedingten Ableitstrom die Einhüllende die Form eines Impulskamms aufweist, während bei zusätzlich vorliegendem Fehlerstrom die Einhüllende anstelle der einzelnen Impulse jeweils die Form einer Si-Funktion (sin(x)/x) aufweist.

Das erfindungsgemäße Verfahren wird in vorteilhafter Weise weitergebildet, wenn zum Erkennen des Fehlerstroms das erfasste Signal zusätzlich daraufhin überprüft wird, ob wenigstens einer der folgenden spektralen Anteile ein vorbestimmtes Kriterium erfüllt: ein 50 Hz-Anteil, ein 60 Hz-Anteil, ein 300 Hz-Anteil, ein 360 Hz-Anteil. Das Kriterium kann dabei für jeden der Signalanteile unterschiedlich sein. Beispielsweise kann geprüft werden, ob die Amplitude des spektralen Anteils größer als ein bestimmter Schwellwert ist. Je nach Typ des elektrischen Versorgungsnetzes, aus welchem der Netzstrom für den Frequenzumrichter empfangen wird, kann anhand des 50 Hz-Anteils bzw. des 60 Hz-Anteils ein netzseitiger Erdschluss erkannt werden, d.h. ein Erdschluss zwischen der Netzleitungseinrichtung für den Netzstrom und einem Erdpotential in deren Umgebung. Anhand des 300 Hz-Anteils bzw. des 360 Hz-Anteil kann in vergleichbarer Weise ein Erdschluss des Zwischenkreises des Frequenzumrichters erkannt werden, d.h. ein Erdschluss zwischen einem elektrischen Leiter für das Pluspotential oder das Minuspotential des Zwischenkreises einerseits und einem Erdpotential in der Umgebung des Zwischenkreises.

Im Bezug auf die Quelle für die Schaltinformation sieht eine Ausführungsform des erfindungsgemäßen Verfahrens vor, dass die Schaltinformation von wenigstens einem Wechselrichter des Frequenzumrichters und/oder einer übergeordneten Steuereinheit, durch welche der wenigstens eine Wechselrichter gesteuert wird, empfangen wird. Hierbei ergibt sich der Vorteil, dass durch einen Wechselrichter auch Informationen bereitstellen können, die innerhalb des Wechselrichters selbst z. B. durch eine Ansteuereinheit für eine Brückenschaltung desselben berechnet wurde. Von einer übergeordneten Steuereinheit können Schaltinformationen zu sämtlichen an dem Zwischenkreis des Frequenzumrichters betriebenen Wechselrichtern über eine einzige Kommunikationsleitung empfangen werden. Zudem sind von der Steuereinheit auch Informationen über bevorstehende Steuervorgänge abrufbar. Solche Informationen stehen beispielsweise im Rahmen eines Betriebs von Geräten nach einem Smart-Energy-Konzept, beispielsweise dem ProfiEnergy-Konzept, bereit. Dann kann die Berechnung des zu erwartenden Signals früher begonnen werden, so dass auch umfangreichere Berechnungen durchgeführt werden können.

Der erfindungsgemäße Fehlerstromschutzschalter ist eine Weiterbildung des einleitend beschriebenen Fehlerstromschutzschalters. Bei dem erfindungsgemäßen Fehlerstromschutzschalter weist die Auswerteeinheit einen zusätzlichen Signaleingang zum Empfangen von Informationen über Schaltvorgänge in dem Frequenzumrichter auf. Die Auswerteeinheit ist zusätzlich dazu ausgelegt, eine Ausführungsform des erfindungsgemäßen Verfahrens auszuführen. Um hierbei den Netzstrom bei erkennen eines Fehlerstroms zu unterbrechen, ist die Auswerteeinheit zudem dazu ausgelegt, das Auslösesignal zum Schalten der Schalteinrichtung zu erzeugen.

Eine Ausführungsform des erfindungsgemäßen Fehlerstromschutzschalters sieht dabei vor, dass der Signaleingang einen Anschluss zum Koppeln des Fehlerstromschutzschalters mit einem digitalen Kommunikationsbus umfasst. Bei dieser Ausführungsform kann der Fehlerstromschutzschalter mit einem Systembus gekoppelt werden, über welchen Steuerinformationen zwischen dem Frequenzumrichter und einer diesem übergeordneten Steuereinheit ausgetauscht werden. Somit können zum Empfangen der Schaltinformation in vorteilhafter Weise bereits vorhandene Systembusse genutzt werden.

Eine andere vorteilhafte Ausführungsform des erfindungsgemä-βen Fehlerstromschutzschalters sieht als Messeinrichtung zum Erfassen des Signals zu dem Gleichtaktstrom in der Netzleitungseinrichtung einen Summenstromwandler vor, insbesondere einen Ringkern mit einer Spule oder einen Kompensationswandler. Hierdurch ergibt sich ein besonders kostengünstig und einfach herzustellender Fehlerstromschutzschalter, der zudem den Vorteil aufweist, dass die Auswerteeinheit galvanisch von der Netzleitungseinrichtung für den Netzstrom entkoppelt ist.

Die Erfindung wird im Folgenden anhand von Ausführungsbeispielen näher erläutert. Dazu zeigt:
- FIG 1: eine schematische Darstellung einer Anordnung aus einem Frequenzumrichter und einem diesem netzseitig vorgeschalteten Fehlerstromschutzschalter, welcher eine Ausführungsform des erfindungsgemäßen Fehlerstromschutzschalters darstellt,
- FIG 2: ein Diagramm mit einem zeitlichen Verlauf einer Stromstärke eines Gleichtaktstroms, wobei der Verlauf ein Signal darstellt, welches sich bei einem Summenstromwandler des Fehlerstromschutzschalters von FIG 1 im fehlerfreien Betrieb ergibt,
- FIG 3: ein Diagramm mit einem zeitlichen Verlauf einer Stromstärke eines Gleichtaktstroms, welcher während eines niederohmigen Erdschlusses mittels des Summenstromwandlers des Fehlerstromschutzschalters von FIG 1 erfasst wurde,
- FIG 4: ein Diagramm mit einem Betragsspektrum zu dem zeitlichen Verlauf von FIG 2 und
- FIG 5: ein Diagramm mit einem Betragsspektrum zu dem zeitlichen Verlauf von FIG 3.

Die Beispiele stellen bevorzugte Ausführungsformen der Erfindung dar.

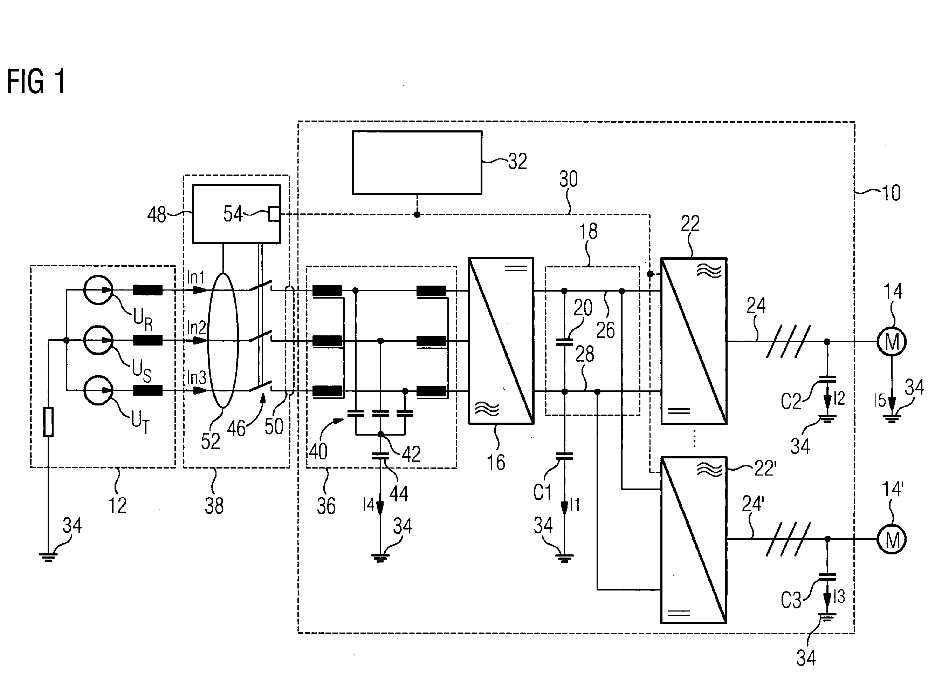

In FIG 1 ist ein Frequenzumrichter 10 gezeigt, welcher an ein dreiphasiges Drehstrom-Versorgungsnetz 12 angeschlossen ist. Netzwechselspannungen oder Sternspannungen Ur, Us, Ut des Versorgungsnetzes 12 weisen in dem Beispiel einen Effektivwert von 230 V und eine Wechselfrequenz von 50 Hz auf. Über den Frequenzumrichter 10 werden an dem Versorgungsnetz 12 elektrische Maschinen 14, 14' betrieben. Der Frequenzumrichter 10 kann beispielsweise dazu ausgelegt sein, eine elektrische Leistung von mehr als 10 kW zu übertragen.

Für den Betrieb der elektrischen Maschinen 14, 14' erzeugt ein Gleichrichter 16 des Frequenzumrichters 10 aus den Sternspannungen Ur, Us, Ut in einem Zwischenkreis 18 eine gleichgerichtete Zwischenkreisspannung, die von einem Glättungskondensator 20 geglättet wird. Aus der Zwischenkreisspannung erzeugen Wechselrichter 22, 22' in jeweiligen dreiphasigen Motorleitungen 24, 24' Wechselspannungen mit einer Wechselfrequenz und einem Effektivwert, die beide mittels des jeweiligen Wechselrichters 22, 22' eingestellt werden.

Zum Erzeugen der Wechselspannungen in den Motorleitungen 24, 24' weisen die Wechselrichter 22, 22' jeweils drei (nicht dargestellte) Halbbrücken mit Halbleiter-Leistungsschaltern auf, über welche einzelne Phasenleiter der Motorleitungen 24, 24' abwechselnd mit einer Pluspotential-Stromschiene 26 und einer Minuspotential-Stromschiene 28 des Zwischenkreises 18 elektrisch verbunden werden. Die einzelnen Leistungsschalter werden in diesem Beispiel dazu mit einem pulsweitenmodulierten Steuersignal angesteuert. Die Steuersignale werden von (nicht dargestellten) Ansteuereinheiten der Wechselrichter 22, 22' erzeugt. Die Ansteuereinheiten erzeugen die Pulssignale in Abhängigkeit von Schaltinformationen, welche sie über einen digitalen Kommunikationsbus 30 von einer übergeordneten Steuereinheit 32 empfangen. Bei dem Kommunikationsbus 30 kann es sich beispielsweise um einen Systembus vom Typ Drive CliQ der Sinamics S120-Systemarchitektur handeln, wie er von dem Unternehmen Siemens AG angeboten wird.

Die Stromschienen 26, 28 weisen gegenüber einem Erdpotential 34 einer Umgebung des Frequenzumrichters 10 eine Koppelkapazität C1 auf. Entsprechend ergeben sich zwischen den Motorleitungen 24, 24' und dem Erdpotential 34 Koppelkapazitäten C2, C3. Die einzelnen Leistungsschalter der Wechselrichter 22, 22' werden in dem Beispiel mit einer Frequenz von 4 kHz geschaltet. Hierdurch ergeben sich in den Spannungsverläufen der Phasenleiter der Motorleitungen 24, 24' und auch in der gleichgerichteten Spannung in den Stromschienen 26, 28 einzelne Schaltspitzen oder Schaltpeaks. Durch die hohe Schaltfrequenz bilden die Koppelkapazitäten C1 bis C3 eine verhältnismäßig niedrige Impedanz, und es fließen daher während eines Betriebs der Maschinen 14, 14' betriebsmäßige Ableitströme I1, 12, 13 zwischen den Komponenten des Frequenzumrichters 10 und dem Erdpotenzial 34.

Dem Gleichrichter 16 sind netzseitig, das heißt zum Versorgungsnetz 12 hin, ein EMV-Filter 36 und ein Fehlerstromschutzschalter 38 vorgeschaltet.

Das EMV-Filter 36 umfasst eine Sternschaltung 40 aus Filterkondensatoren, deren Sternpunkt 42 über einen Erdungskondensator 44 mit dem Erdpotential 34 kapazitiv gekoppelt ist. Über den Erdungskondensator 44 fließt ein betriebsmäßiger Ableitstrom 14 zum Erdpotential 34 hin ab.

Bei dem Fehlerstromschutzschalter 38 handelt es sich um eine Ausführungsform des erfindungsgemäßen Schutzschalters. Mit dem Fehlerstromschutzschalter 38 können vom Versorgungsnetz 12 in den Frequenzumrichter 10 fließende Netzströme In1, In2, In3 durch ein Schütz 46 unterbrochen werden. Das Schütz 46 wird durch eine Auswerteeinheit 48 des Fehlerstromschutzschalters 38 immer dann geöffnet, wenn eine Stromstärke eines Gleichtaktstroms, der als Summenstrom zwischen drei Netzphasenleitern 50 des Versorgungsnetzes 12 ermittelt wird, einen vorbestimmten Grenzwert überschreitet. Die Netzphasenleiter 50 bilden eine Netzleitungseinrichtung.

Zum Messen des Gleichtaktstroms weist der Fehlerstromschutzschalter 38 einen Ringkern 52 auf. Die drei Netzphasenleiter 50 sind gemeinsam durch den Ringkern 52 geführt. Auf dem Ringkern 52 befindet sich eine zusätzliche Spule, über die ein Spannungssignal gemessen wird, welches proportional zum Summenstrom Is = In1+In2+In3 ist. Das Signal der Spule wird von der Auswerteeinheit 48 als Signal zu dem Gleichtaktstrom Is ausgewertet. Alternativ zu einer Spannungsmessung an der Spule selbst kann auch nach dem Kompensationswandlerprinzip gemessen werden. Der Summenstrom Is ist auch während eines fehlerfreien Betriebs des Frequenzumrichters 10 nicht gleich Null. Durch die betriebsmäßigen Ableitströme 11 bis 14 entspricht ein zeitlicher Verlauf des Summenstroms Is denjenigen der Summe aus den Ableitstrom I1 bis 14.

Die Auswerteeinheit 48 ist über einen Busanschluss 54 an den Kommunikationsbus 30 angeschlossen und empfängt die Schaltinformationen, die zwischen der Steuereinheit 32 und den Wechselrichtern 22, 22' über den Kommunikationsbus 30 ausgetauscht werden.

Für die folgenden Erläuterungen sei angenommen, dass in der elektrischen Maschine 14 eine elektrische Leitung beschädigt ist und sich hierdurch ein niederohmiger Erdschluss zwischen der elektrischen Maschine 14 und dem Erdpotential 34 ergibt, so dass zwischen der elektrischen Maschine 14 und dem Erdpotential 34 ein Fehlerstrom 15 fließt.

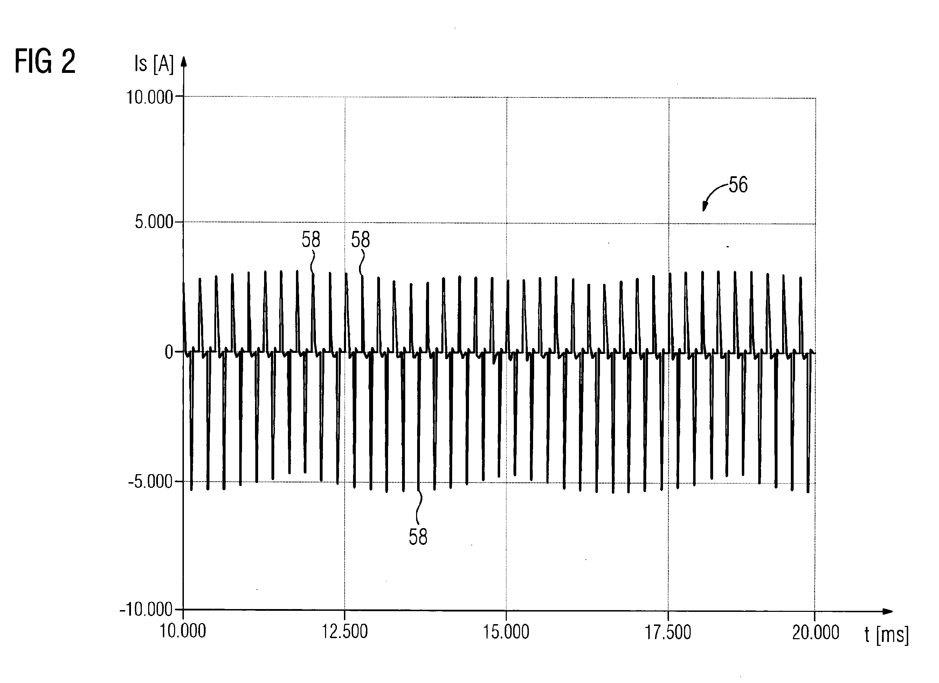

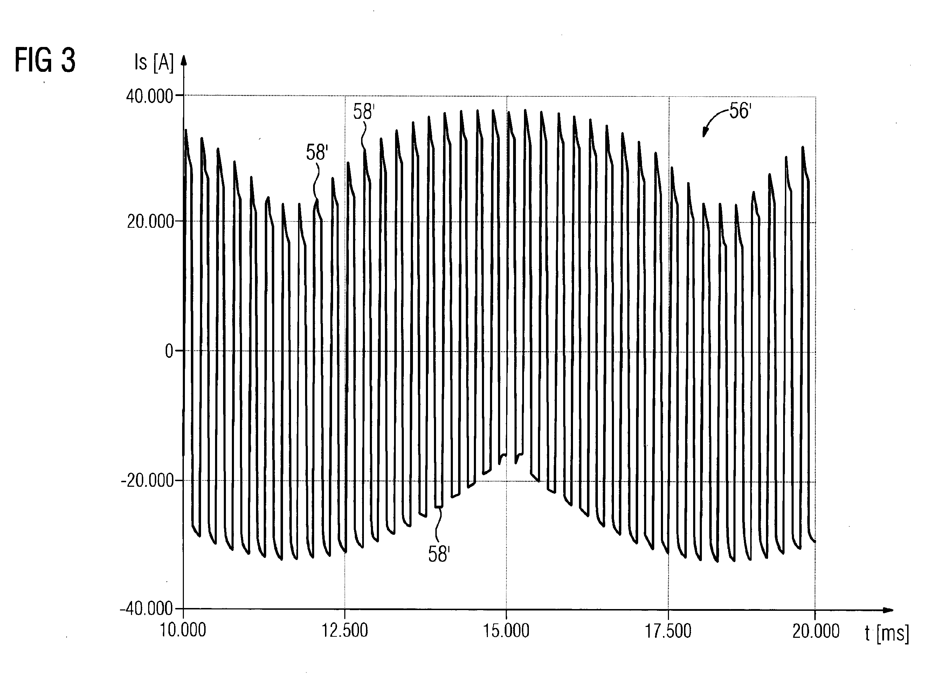

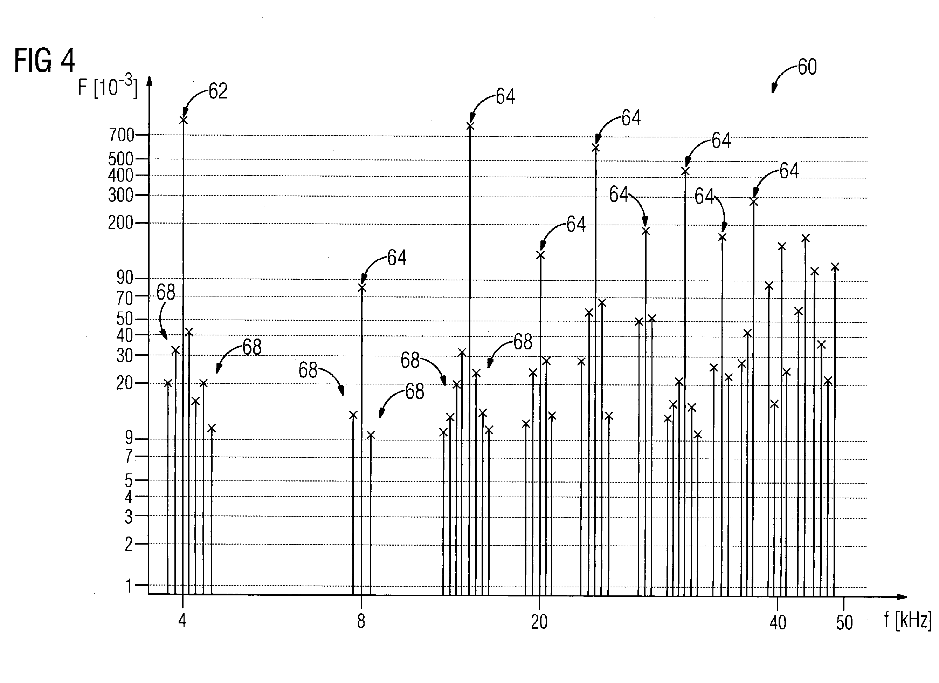

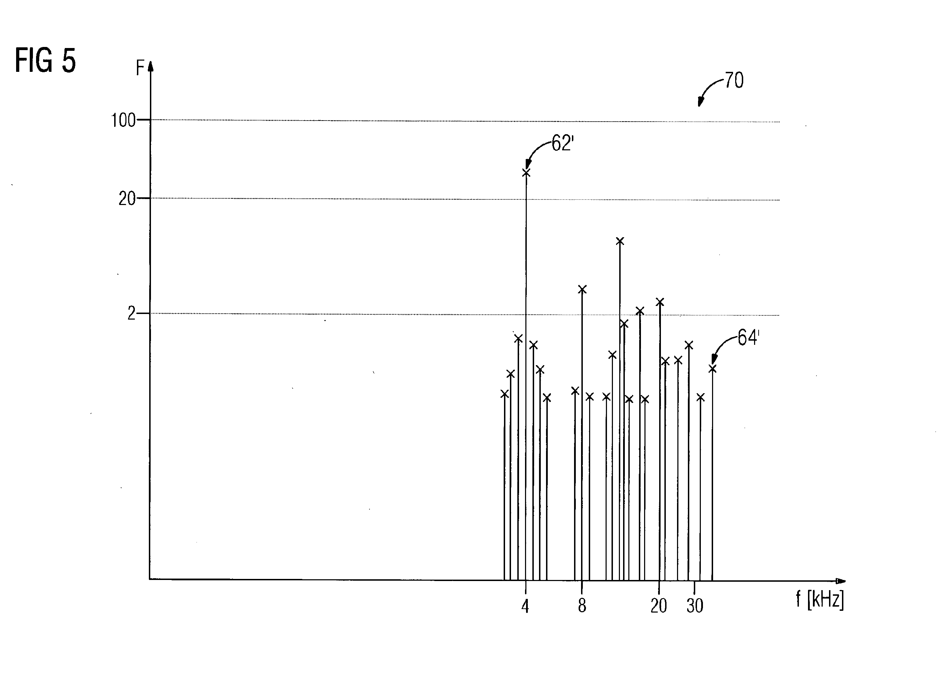

In FIG 2 ist ein Verlauf des Summenstroms Is (in Ampere A) über der Zeit t (in ms) gezeigt, wie er sich im fehlerfreien Betrieb ergibt (Is=I1+I2+I3+I4). FIG 4 zeigt zugehörige Beträge F des Betragspektrums über der Frequenz f (in Hz). In FIG 3 zeigt dagegen den zeitliche Verlauf des Summenstroms Is während des niederohmigen Erdschlusses (Is=I1+I2+I3+I4+I5). Die Einheiten in dem Diagramm von FIG 3 entsprechen denjenigen von FIG 2. FIG 5 zeigt ein Betragsspektrum zum Diagramm von FIG 3 gezeigt. Die Einheiten des Diagramms von FIG 5 entsprechen denjenigen des Diagramms von FIG 4.

Der Fehlerstromschutzschalter 38 ist in der Lage, die betriebsmäßigen Ableitströme I1 bis 14 von dem tatsächlichen Fehlerstrom 15 zu unterscheiden. Hierzu empfängt die Ansteuereinheit 48 von der übergeordneten Steuereinheit 32 über den Kommunikationsbus 30 die Schaltinformation für die Wechselrichter 22, 22'. Die Ansteuereinheit 48 weist eine Auswerteelektronik auf, die zum Beispiel in Form eines digitalen Signalprozessors oder eines Mikrocontrollers bereitgestellt sein kann.

Durch die Auswerteelektronik kann der zu erwartender Verlauf 56 des Summenstroms Is (siehe FIG 2), d.h. ein zu erwartendes Signals der Spule des Ringkerns 52 berechnet werden, wie es sich im fehlerfreien Betrieb (Is=I1+I2+I3+I4) ergeben müsste. Die entscheidende Information, die in diesem Beispiel von der Auswerteeinheit 48 benötigt wird, um die Zeitpunkte des Auftretens der zu erwartenden betriebsmäßigen Ableitströme I1 bis 14 ermitteln zu können, sind die Schaltzeitpunkte der einzelnen Leistungsschalter. Beim Auftreten einer Spannungsspitze während eines zu erwartenden Schaltvorgangs wird diese von der Auswerteeinheit 48 zunächst als Ableitstrompeak eines betriebsmäßigen Ableitstroms I1 bis 14 akzeptiert und eine zu erwartende Schaltdauer abgewartet. In FIG 2 sind von den erwarteten Ableitstrompeaks 58 der Übersichtlichkeit halber lediglich drei mit einem Bezugszeichen versehen.

Ist nach der zu erwartenden Schaltdauer ein Betrag der Stromstärke des Summenstroms Is immer noch größer als ein vorbestimmter Grenzwert, so wird dies von der Auswerteeinheit 48 als Fehlfunktion interpretiert. Die Auswerteeinheit 48 erzeugt daraufhin ein Auslösesignal, durch welches das Schütz 46 geöffnet wird. In FIG 3 ist der entsprechende Verlauf 56' des Summenstroms Is gezeigt, wie er sich bei Vorliegen des Fehlerstroms 15 ergibt (Is = I1+I2+I3+I4+I5). Einzelne Schaltspitzen oder Schaltpeaks 58' weisen eine größere Amplitude auf als die Ableitstrompeaks 58. Zudem klingen die Schaltpeaks 58' deutlich langsamer ab als die Ableitstrompeaks 58. Sie bilden dadurch jeweils einen Rechteckpuls.

Die Schaltvorgänge in den Wechselrichtern 22, 22' müssen nicht synchronisiert zueinander stattfinden. Das zeitweise Ausblenden des Erkennungsvorgangs für den Fehlerstrom 15 aufgrund zeitlich kurz hintereinander stattfindender Schaltvorgänge kann insgesamt dazu führen, dass sich bei zu vielen an den Zwischenkreis 18 angeschlossenen Wechselrichtern eine Ausblendzeit ergibt, die keine ausreichende Schutzfunktion des Frequenzumrichters 10 durch den Fehlerstromschutzschalter 38 ermöglicht. Hier kann vorgesehen sein, dass der Fehlerstromschutzschalter 38 über den Kommunikationsbus 30 der übergeordneten Steuereinheit 32 einen Verzögerungsbefehl übermittelt, durch welchen dann weitere Steuerimpulse verschoben werden und damit eine Kontrolle auf einen Erdschluss im System durch den Fehlerstromschutzschalter 38 ermöglicht wird.

Neben der Ausblendung der einzelnen Schaltflanken, d.h. der Ableitstrompeaks 58 bzw. der Transienten der Schaltpeaks 58', kann auch vorgesehen sein, die Höhe der zu erwartenden Ableitstrompeaks 58 abzuschätzen. Hierzu empfängt die Ansteuereinheit 48 dann über den Kommunikationsbus 30 neben den Schaltzeitpunkten auch eine Information über die mittlere Flankensteilheit der Wechselstromrichter 22, 22'. Zusätzlich wird in der Auswerteeinheit 48 eine Information über die parasitäre Erdkapazität, d.h. die Koppelkapazitäten C1 bis C3, gespeichert. Zusätzlich kann die Information mit verarbeitet werden, ob ein Phasenleiter der Motorleitungen 24, 24' durch einen Schaltvorgang auf die Stromschiene 26 oder die Stromschiene 28 geschaltet wird.

Um den Kommunikationsaufwand auf den Kommunikationsbus 30 gering zu halten, können statt der eigentlichen Schaltzeitpunkte Informationen über die Sollspannungen der einzelnen Wechselrichter 22, 22' und deren Pulsfrequenz übermittelt werden. Dann ist es möglich, ein Pulsmuster in der Auswerteeinheit 48 zu berechnen, mit dem eine Plausibilitätsprüfung der gemessenen Ableitstromspitzen (d.h. die Ableitstrompeaks 58) möglich ist.

Um den notwendigen Datentransfer zwischen der Steuereinheit 32 und der Auswerteeinheit 48 weiter zu reduzieren, kann die Information als Frequenzbetragsspektrum 60 übertragen werden. Hier kann ausgenutzt werden, dass das Betragsspektrum 60 des Signals der Spule des Ringkerns 52 im fehlerfreien Betrieb ein Linienspektrum ist, d.h. es ist ausreichend, bestimmte Stützstellen wie die Amplitude 62 bei der Pulsfrequenz (4kHz) und diejenigen Amplituden 64 bei ihren ganzzahligen Vielfachen sowie die Amplituden der Seitenbänder 68 zu diesen Punkten zu übertragen. In FIG 4 sind dazu der Übersichtlichkeit halber exemplarisch nur einige der Amplitude 64 sowie der Seitenbänder 68 mit Bezugszeichen versehen.

Das Betragsspektrum 60 kann aus den Sollspannungen, die von der Steuereinheit 32 zur Verfügung gestellt werden, durch die Auswerteeinheit 48 selbst oder aber bereits durch die Steuereinheit 32 gebildet werden. Dieses kann dann mit dem gemessenen Betragsspektrum 70 des Summenstroms Is verglichen werden, um Abweichungen festzustellen. Hierzu können auch Einhüllende der Betragsspektren 60, 70 herangezogen werden. Für den Fall, dass der Summenstrom Is lediglich aus den betriebsmäßigen Ableitströmen besteht (siehe FIG 2) lassen sich die in dem Verlauf 56 erkennbaren Stromspitzen 58 als Impulskamm beschreiben. Die Fouriertransformierte hiervon ist wiederum ein Impulskamm. Ein Erdschlussfehler auf einer Ausgangsleitung, d.h. einer der Motorleitungen 24, 24', wird dagegen immer zu einem blockförmigen Strom mit der Pulsfrequenz als Signalfrequenz führen (siehe FIG 3). Die Fouriertransformierte hiervon ist eine Funktion, die mit sinus(x)/x abklingt. Entsprechend beträgt eine Amplitude 62' im Betragsspektrum 70 bei 4 kHz einen Wert von über Dreißig und eine Amplitude 64' bei einer Frequenz von ca. 40 kHz nur eine Amplitude von 0,7 (700m, wobei m für milli steht). Dies entspricht einem Verhältnis der Amplitude von ca. 57. Im Betragsspektrum 60 ergibt sich dagegen für die Amplitude 62 bei 4 kHz einen Wert von Eins und bei ca. 40 kHz ein Wert von ca. 0,1 (100m). Das Amplitudeverhältnis beträgt somit nur 10.

Ob ein Summenstrom Is ausschließlich betriebsmäßige Ableitströme oder auch einen Fehlerstrom umfasst, lässt sich demnach anhand der Einhüllenden der Betragspektren mit der Pulsfrequenz und deren ganzzahligen Vielfachen erkennen. Ist diese Einhüllende ein Impulskamm der nur langsam abklingt, ist dies ein normaler Betriebszustand. Klingt die Einhüllende mit sin(x)/x ab, handelt es sich hierbei um einen Fehlerstrom durch einen Erdschluss auf einer Motorleitung 24, 24'.

Bei dem Fehlerstromschutzschalter 38 erfolgt eine Erkennung eines Erdschlusses im Zwischenkreis 18 bzw. netzseitig des Gleichrichters 16 durch Überwachen eines Betrags der Frequenzanteile des Summenstroms Is bei 300 Hz/360 Hz (Erkennung für den Zwischenkreis) bzw. bei 50 Hz/60 Hz (Erkennung für die Netzseite).

Insgesamt ist durch die Beispiele gezeigt, wie bei einem Fehlerstromschutzschalter ermöglicht werden kann, einen Erdschlussfehler auf Motorausgangsleitungen bei Pulswechselrichtern von deren betriebsmäßigem Ableitstrom zu unterscheiden. Diese Unterscheidung beruht entweder auf den Zeitpunkt, an welchem ein bestimmter Strom fließt, dem eine Schalthandlung in den Pulswechselrichtern zugeordnet werden kann, oder dem Betragsspektrum, das sich hierdurch ergibt. So lassen sich problemlos auch hochohmige Erdschlussfehler erkennen. Die notwendigen Informationen erhält der Fehlerstromschutzschalter über einen Systembus, dessen eigentliche Aufgabe es ist, die Informationen einer Steuer- und Regeleinheit auf die Antriebsmodule (d.h. die Wechselrichter) zu übertragen.

## Patentansprüche

1. Verfahren zum Betreiben eines Fehlerstromschutzschalters (38) für einen Frequenzumrichter (10), umfassend die Schritte:
- Empfangen einer Schaltinformation über Schaltvorgänge in dem Frequenzumrichter (10);
- Erfassen eines Signals (56',70) zu einem Gleichtaktstrom (Is) in einer Netzleitungseinrichtung (50), über welche der Frequenzumrichter (10) einen Netzstrom (In1,In2,In3) empfängt;
**gekennzeichnet durch** die Schritte:
- anhand der Schaltinformation, Ermitteln eines zu erwartenden Signals (56,60) zu dem Gleichtaktstrom (Is), wie es sich aufgrund der Schaltvorgänge im fehlerfreien Betrieb ohne einen tatsächlichen Fehlerstrom (I5) ergeben würde;
- anhand des erfassten Signals (56',70) und des zu erwartenden Signals (56,60), Erkennen eines Fehlerstroms (15) und gegebenenfalls Unterbrechen des Netzstroms (In1, In2, In3).

2. Verfahren nach Anspruch 1, **dadurch gekenn** - **zeichnet** , dass das erfasste Signal (56',70) und das zu erwartende Signal (56,60) jeweils einen zeitlichen Verlauf (56,56') einer Stromstärke des Gleichtaktstroms (Is) und/oder ein Betragsspektrum (60,70) dieses Verlaufs (56, 56') umfassen.

3. Verfahren nach Anspruch 1 oder 2, **dadurch ge**- **kennzeichnet** , dass zum Erkennen des Fehlerstroms (15) überprüft wird, ob das erfasste Signal (56',70) ein Kriterium erfüllt, welches von dem zu erwartenden Signal (56,60) abhängt.

4. Verfahren nach einem der vorhergehenden Ansprüche, **dadurch gekennzeichnet , dass** als Schaltinformation zumindest eine Information zu einem Schaltzeitpunkt empfangen wird, in welchem ein Leistungsschalter des Frequenzumrichters (10) geschaltet wird.

5. Verfahren nach einem der vorhergehenden Ansprüche, **dadurch gekennzeichnet , dass** als Schaltinformation zumindest eine Information zu einer Flankensteilheit und/oder Erdkapazität (C1 bis C4) empfangen wird.

6. Verfahren nach einem der vorhergehenden Ansprüche, **dadurch gekennzeichnet , dass** als Schaltinformation zumindest eine Information darüber empfangen wird, ob durch einen Schaltvorgang eine Wechselspannungs-Leitung (24,24') eines Wechselrichters (22,22') des Frequenzumrichters (10) mit einem Pluspotential (26) oder einem Minuspotential (28) eines Zwischenkreises (18) des Frequenzumrichters (10) elektrisch verbunden wird.

7. Verfahren nach einem der vorhergehenden Ansprüche, **da** - **durch gekennzeichnet** , dass als Schaltinformation zumindest eine Information über eine Sollspannung und/oder eine Pulsfrequenz empfangen wird, welche durch einen Wechselrichter (22,22') des Frequenzumrichters (10) erzeugt werden.

8. Verfahren nach einem der vorhergehenden Ansprüche, **da** - **durch gekennzeichnet** , dass die Schaltinformation als Frequenzspektrum (60) des zu erwartenden Signals (56) für den Gleichtaktstrom (Is) empfangen wird.

9. Verfahren nach einem der vorhergehenden Ansprüche, **dadurch gekennzeichnet , dass** als Schaltinformation zumindest eine Information über wenigstens eine der folgenden Betriebsgrößen eines Wechselrichters (22,22') des Frequenzumrichters (10) empfangen wird: eine Motorfrequenz, ein Aussteuergrad, eine Pulsfrequenz.

10. Verfahren nach einem der vorhergehenden Ansprüche, **dadurch gekennzeichnet , dass** zum Erkennen des Fehlerstroms (15) jeweils eine spektrale Einhüllende zu einem erfassten Frequenzspektrum (70) einerseits und einem zu erwartenden Frequenzspektrum (60) andererseits gebildet wird.

11. Verfahren nach einem der vorhergehenden Ansprüche, **dadurch gekennzeichnet , dass** zum Erkennen des Fehlerstroms (15) das erfasste Signal (56') zusätzlich daraufhin überprüft wird, ob wenigstens einer der folgenden spektralen Anteile ein jeweils zu diesem Signalanteil entsprechend vorgegebenes Kriterium erfüllt: ein 50 Hz-Anteil, ein 60 Hz-Anteil, ein 300 Hz-Anteil, ein 360 Hz-Anteil.

12. Verfahren nach einem der vorhergehenden Ansprüche, **dadurch gekennzeichnet, dass** die Schaltinformation von wenigstens einem Wechselrichter (22,22') des Frequenzumrichters (10) und/oder von einer übergeordneten Steuereinheit (32), durch welche der wenigstens eine Wechselrichter (22,22') gesteuert wird, empfangen wird.

13. Fehlerstromschutzschalter (38) für einen Frequenzumrichter (10), umfassend:
- einer Netzleitungseinrichtung (50), welche dazu ausgelegt ist, dem Frequenzumrichter (10) einen Netzstrom (In1, In2, In3) aus einem elektrischen Versorgungsnetz (12) zuzuführen,
- eine Schalteinrichtung (46), welche dazu ausgelegt ist, den Netzstrom (In1,In2,In3) in der Netzleitungseinrichtung (50) auf ein Auslösesignal hin zu unterbrechen,
- eine Messeinrichtung (52), welche dazu ausgelegt ist, in der Netzleitungseinrichtung (50) ein Signal (56',70) zu einem Gleichtaktstrom (Is) zu erfassen,
- eine Auswerteeinheit (48), über welche die Messeinrichtung (52) mit der Schalteinrichtung (46) gekoppelt ist,
**dadurch gekennzeichnet , dass** die Auswerteeinheit (48) einen zusätzlichen Signaleingang (54) zum Empfangen von Informationen über Schaltvorgänge in dem Frequenzumrichter (10) aufweist und dass die Auswerteeinheit dazu ausgelegt ist, ein Verfahren nach einem der vorhergehenden Ansprüche auszuführen und hierbei zum Unterbrechen des Netzstromes (In1,In2,In3) das Auslösesignal für die Schalteinrichtung (46) zu erzeugen.

14. Fehlerstromschutzschalter nach Anspruch 13, **da** - **durch gekennzeichnet** , dass der Signaleingang (54) einen Anschluss (54) zum Koppeln des Fehlerstromschutzschalters (38) mit einem digitalen Kommunikationsbus (30) umfasst.

15. Fehlerstromschutzschalter nach Anspruch 13 oder 14, **dadurch gekennzeichnet , dass** die Messeinrichtung (52) einen Summenstromwandler (52) umfasst, insbesondere einen Ringkern (52) oder einen Kompensationswandler.

## Claims

1. Method for operating a ground fault interrupter (38) for a frequency converter (10), comprising the steps:
- Receiving switching information about the switching operations in the frequency converter (10);
- Detecting a signal (56', 70) for a common mode current (Is) in a power line device (50), via which the frequency converter (10) receives a mains power (In1, In2, In3);
**characterised by** the steps:
- On the basis of the switching information, determining a signal (56, 60) to be expected for the common mode current (Is), as would be produced as a result of the switching processes in fault-free operation without an actual fault current (I5);
- On the basis of the detected signal (56', 70) and of the signal (56, 60) to be expected, detecting a fault current (I5) and if necessary interrupting the mains power (In1, In2, In3).

2. Method according to claim 1, **characterised in that** the detected signal (56', 70) and the signal (56, 60) to be expected each comprise a timing curve (56, 56') of a dielectric strength of the common mode current (Is) and/or an absolute value spectrum (60, 70) of this curve (56, 56').

3. Method according to claim 1 or 2, **characterised in that**, to detect the fault current (I5) a check is made as to whether the detected signal (56', 70) fulfils a criterion which depends on the signal (56, 60) to be expected.

4. Method according to one of the preceding claims, **characterised in that** at least one item of information is received as switching information for a switching time at which a circuit breaker of the frequency converter (10) will be switched.

5. Method according to one of the preceding claims, **characterised in that** at least one item of information about an edge gradient and/or ground capacity (C1 to C4) is received as switching information.

6. Method according to one of the preceding claims, **characterised in that** at least one item of information about whether, by means of a switching process, a mains voltage line (24, 24') of an inverter (22, 22') of the frequency converter (10) will be electrically connected to a plus potential (26) or a minus potential (28) of a dc link circuit (18) of the frequency converter (10) is received as switching information.

7. Method according to one of the preceding claims, **characterised in that** at least one item of information about a required voltage and/or a pulse frequency which will be generated by an inverter (22, 22') of the frequency converter (10) is received as switching information.

8. Method according to one of the preceding claims, **characterised in that** the switching information is received as a frequency spectrum (60) of the signal (56) to be expected for the common mode voltage (Is).

9. Method according to one of the preceding claims, **characterised in that** at least one item of information about at least one of the following operational variables of an inverter (22, 22') of the frequency converter (10) is received as switching information: A motor frequency, a degree of control, a pulse frequency.

10. Method according to one of the preceding claims, **characterised in that**, to detect the fault current (I5) , a spectral envelope for a detected frequency spectrum (70) on the one hand and a frequency spectrum to be expected (60) on the other hand are formed respectively.

11. Method according to one of the preceding claims, **characterised in that**, to detect the fault current (I5) , the detected signal (56') is also checked as to whether at least one of the following spectral components fulfils a respective predetermined criterion belonging to this signal component: A 50 Hz component, a 60 Hz component, a 300 Hz component, a 360 Hz component.

12. Method according to one of the preceding claims, **characterised in that** the switching information is received from at least one inverter (22, 22') of the frequency converter (10) and/or from a higher-ranking control unit (32), through which the at least one inverter (22, 22') is controlled.

13. Ground fault interrupter (38) for a frequency converter (10), comprising:
- A power line device (50), which is designed to supply the frequency converter (10) with mains power (In1, In2, In3) from an electrical power supply network (12),
- A switching device (46), which is designed to interrupt the mains power (In1, In2, In3) in the power line device (50) in response to a trigger signal,
- A measurement device (52), which is designed to detect a signal (56', 70) for a common mode current (Is) in the power line device (50),
- An evaluation unit (48), via which the measurement device (52) is coupled to the switching device (46),
**characterised in that**
the evaluation unit (48) has an additional signal input (54) to receive information about switching processes in the frequency converter (10) and that the evaluation unit is designed to carry out a method according to one of the preceding claims and, in doing so, to interrupt the mains power (In1, In2, In3), to generate the trigger signal for the switching device (46).

14. Ground fault interrupter according to claim 13, **characterised in that** the signal input (54) has a connection (54) to couple the ground fault interrupter (38) to a digital communication bus (30).

15. Ground fault interrupter according to claim 13 or 14, **characterised in that** the measurement device (52) comprises a sum current converter (52), especially a ring core (52) or a compensation converter.

## Revendications

1. Procédé pour faire fonctionner un disjoncteur ( 38 ) à courant de fuite pour un convertisseur ( 10 ) de fréquence, comprenant les stades :
- réception d'une information de commutation sur des opérations de commutation dans le convertisseur ( 10 ) de fréquence ;
- détection d'un signal ( 56', 70 ) sur un courant ( Is ) continu d'horloge dans un dispositif ( 50 ) de ligne de réseau, par lequel le convertisseur ( 10 ) de fréquence reçoit un courant ( In1, In2, In3 ) de réseau ;
**caractérisé par** les stades :
- au moyen de l'information de commutation, détermination d'un signal ( 56, 60 ) escompté sur le courant ( Is ) continu d'horloge tel qu'il résulterait d'opérations de commutation en fonctionnement exempt de défaut, sans un courant ( I5 ) de fuite réel ;
- au moyen du signal ( 56', 70 ) détecté et du signal ( 56, 60 ) escompté, détection d'un courant ( 15 ) de fuite et, le cas échéant, interruption du courant ( In1, In2, In3 ) de réseau.

2. Procédé suivant la revendication 1, **caractérisé en ce que** le signal ( 56', 70 ) détecté et le signal ( 56, 60 ) escompté comprennent respectivement une variation ( 56, 56' ) dans le temps d'une intensité du courant ( Is ) continu d'horloge et/ou un spectre ( 60, 70 ) en valeur absolue de cette variation ( 56, 56' ).

3. Procédé suivant la revendication 1 ou 2, **caractérisé en ce que**, pour la détection du courant ( 15 ) de fuite, on contrôle si le signal ( 56', 70 ) détecté satisfait à un critère, qui dépend du signal ( 56, 60 ) escompté.

4. Procédé suivant l'une des revendications précédentes, **caractérisé en ce qu'**on reçoit comme information de commutation au moins une information sur un instant de commutation où un disjoncteur du convertisseur ( 10 ) de fréquence est mis en circuit.

5. Procédé suivant l'une des revendications précédentes, **caractérisé en ce qu'**on reçoit comme information de commutation au moins une information sur une pente de front et/ou une capacité ( C1 à C4 ) de terre.

6. Procédé suivant l'une des revendications précédentes, **caractérisé en ce qu'**on reçoit comme information de commutation au moins une information sur le point de savoir si, par une opération de commutation, une ligne ( 24, 24' ) de tension alternative d'un onduleur ( 22, 22' ) du convertisseur ( 10 ) de fréquence est reliée électriquement au potentiel ( 26 ) positif ou au potentiel ( 28 ) négatif d'un circuit ( 18 ) intermédiaire du convertisseur ( 10 ) de fréquence.

7. Procédé suivant l'une des revendications précédentes, **caractérisé en ce qu'**on reçoit comme information de commutation au moins une information sur une tension de consigne et/ou sur une fréquence d'impulsion, qui sont produites par un onduleur ( 22, 22' ) du convertisseur ( 10 ) de fréquence.

8. Procédé suivant l'une des revendications précédentes, **caractérisé en ce qu'**on reçoit l'information de commutation sous la forme d'un spectre ( 60 ) de fréquence du signal ( 56 ) escompté pour le courant ( Is ) continu d'horloge.

9. Procédé suivant l'une des revendications précédentes, **caractérisé en ce qu'**on reçoit comme information de commutation au moins une information sur au moins l'une des grandeurs de fonctionnement suivantes d'un onduleur ( 22, 22' ) du convertisseur ( 10 ) de fréquence : une fréquence de moteur, un taux de modulation, une fréquence d'impulsion.

10. Procédé suivant l'une des revendications précédentes, **caractérisé en ce que**, pour la détection du courant ( I5 ) de fuite, on forme respectivement une enveloppe spectrale d'un spectre ( 70 ) de fréquence détecté, d'une part, et d'un spectre ( 60 ) de fréquence escompté, d'autre part.

11. Procédé suivant l'une des revendications précédentes, **caractérisé en ce que**, pour la détection du courant ( I5 ) de fuite, on contrôle le signal ( 56' ) détecté supplémentairement sur le point de savoir si au moins l'une des parties suivantes du spectre satisfait à un critère donné à l'avance correspondant à cette partie du signal : une partie à 50 Hz, une partie à 60 Hz, une partie à 300 Hz, une partie à 360 Hz.

12. Procédé suivant l'une des revendications précédentes, **caractérisé en ce qu'**on reçoit l'information de commutation d'au moins un onduleur ( 22, 22' ) du convertisseur ( 10 ) de fréquence et/ou d'une unité ( 32 ) de commande supérieure hiérarchiquement, par laquelle le au moins un onduleur ( 22, 22' ) est commandé.

13. Disjoncteur ( 38 ) à courant de fuite pour un convertisseur ( 10 ) de fréquence, comprenant :
- un dispositif ( 50 ) de ligne de réseau, qui est conçu pour envoyer au convertisseur ( 10 ) de fréquence un courant ( In1, In2, In3 ) d'un réseau ( 12 ) d'alimentation électrique,
- un dispositif ( 45 ) de commutation, qui est conçu pour interrompre le courant ( In1, In2, In3 ) de réseau dans le dispositif ( 50 ) de ligne de réseau à un signal de déclenchement,
- un dispositif ( 52 ) de mesure, qui est conçu pour détecter, dans le dispositif ( 50 ) de ligne de réseau, un signal ( 56', 70 ) sur un courant ( Is ) continu d'horloge,
- une unité ( 48 ) d'exploitation, par laquelle le dispositif ( 52 ) de mesure est relié au dispositif ( 46 ) de commutation,
**caractérisé en ce que**
l'unité ( 48 ) d'exploitation a une entrée ( 54 ) supplémentaire de signal pour la réception d'informations sur des opérations de commutation dans le convertisseur ( 10 ) de fréquence et **en ce que** l'unité d'exploitation est conçue pour effectuer un procédé suivant l'une des revendications précédentes et pour produire ainsi, pour l'interruption du courant ( In1, In2, In3 ) de réseau, le signal de déclenchement du dispositif ( 46 ) de commutation.

14. Disjoncteur à courant de fuite suivant la revendication 13, **caractérisé en ce que** l'entrée ( 54 ) de signal comprend une borne ( 54 ) pour relier le disjoncteur ( 38 ) à courant de fuite à un bus ( 30 ) de communication numérique.

15. Disjoncteur à courant de fuite suivant la revendication 13 ou 14, **caractérisé en ce que** le dispositif ( 52 ) de mesure comprend un transformateur ( 52 ) de courant de somme, notamment un tore ( 52 ) ou un transformateur de compensation.
